# EUROPÄISCHE PATENTSCHRIFT

(11) **EP 1 861 463 B1**
(45) Veröffentlichungstag und Bekanntmachung des Hinweises auf die Patenterteilung: **26.08.2009**
(21) Anmeldenummer: 06707933.5
(22) Anmeldetag: 28.01.2006
(51) Int. Cl.: C08L 33/06, C08K 5/06, C09D 4/00

(54) **MIT UV-A-STRAHLUNG HÄRTBARES, LÖSEMITTELHALTIGES GEMISCH, VERFAHREN ZU SEINER HERSTELLUNG UND SEINE VERWENDUNG**
MIXTURE CONTAINING A SOLVENT, WHICH CAN BE CURED WITH UV-A RADIATION, METHOD FOR ITS PRODUCTION AND USE THEREOF
MELANGE DURCISSABLE PAR RAYONNEMENT UV-A ET CONTENANT DES SOLVANTS, PROCEDE DE PRODUCTION ET UTILISATION DE CE MELANGE

(30) Priorität: 18.03.2005 DE 102005012589
(43) Veröffentlichungstag der Anmeldung: 05.12.2007
(73) Patentinhaber: BASF Coatings AG, 48165 Münster (DE)
(72) Erfinder: NIENHAUS, Egbert, 59387 Ascheberg (DE); REIZE, Klaus-Udo, 48165 Münster (DE); LETTMANN, Bernhard, 48317 Drensteinfurt (DE)
(74) Vertreter: Leifert & Steffan
(86) Internationale Anmeldenummer: PCT/EP2006/050566
(87) Internationale Veröffentlichungsnummer: WO 2006/097386

(56) Entgegenhaltungen:
- DE-A1- 10 202 565
- DE-A1- 10 316 890
- US-A1- 2003 157 249

## Beschreibung

Die vorliegende Erfindung betrifft ein, mit UV-A-Strahlung härtbares, lösemittelhaltiges Gemisch. Außerdem betrifft die vorliegende Erfindung ein neues Verfahren zur Herstellung eines mit UV-A-Strahlung härtbaren, Iösemittelhaltigen Gemischs. Des Weiteren betrifft die vorliegende Erfindung die Verwendung des neuen, mit UV-A-Strahlung härtbaren, Iösemittelhaltigen Gemischs oder des mit Hilfe des neuen Verfahrens hergestellten mit UV-A-Strahlung härtbaren, Iösemittelhaltigen Gemischs als Spotblender in der Kraftfahrzeugreparaturlackierung.

Bei der Kraftfahrzeugreparaturlackierung werden im Falle großer Schadstellen üblicherweise die beschädigten Teile der Karosserien entnommen und vollflächig reparaturlackiert. Bei Kleinstschäden, die gerade bei neuen und/oder besonders hochwertigen Kraftfahrzeugen sehr ärgerlich sind, wie etwa Schlüssel kratzer oder Rempler (beispielsweise an einer Parkplatzbeg renzung), ist diese Verfahrensweise aber sehr aufwändig und der Größe des Schadens nicht angemessen. Kleinstschäden werden daher vorzugsweise mit Hilfe von Verfahren zur KFZ-Kleinstreparatur im Teil behoben. Diese Verfahren werden von der Fachwelt auch als Punktausbesserung oder Spot-Repair bezeichnet.

Die bekannten Spot-Repair-Verfahren weisen aber zahlreiche Nachteile auf und sind schwierig durchzuführen. So sind häufig die Auslaufzonen des Klarlack-Spritznebels auf der Originallackierung zu weit, was die optische Anpassung von Reparaturlackierung und Originallackierung erschwert. Außerdem kann wegen einer schlechten Haftung der Reparatur-Klarlackierung auf der Originallackierung in den Auslaufzonen um die Schadstelle die Reparatur-Klarlackierung wegbrechen oder ausreißen. Dadurch entstehen deutlich sichtbare Kanten, die die Reparatur-Klarlackierung, die sich unmittelbar über der Originallackierung befindet, sogar ganz umlaufen können. Die Reparaturlackierung wirkt dann wegen der optisch harten Übergangszonen insgesamt wie ein "aufgeklebtes Pflaster".

Man hat versucht, die Probleme des Wegbrechens oder Ausreißens und der schwierigen Anpassung der optischen Eigenschaften in den Auslaufzonen dadurch zu lösen, dass man so genannte Spotblender über die ungehärtete Reparatur-Klarlackierung appliziert. Hierdurch sollen besonders "weiche" Übergangszonen erzeugt und verhindert werden, dass die Reparatur-Klarlackierung in den Randzonen zur Originallackierung ausreißt.

Hier hat das aus der deutschen Patentanmeldung DE 100 43 810 A1 bekannte Spot-Repair-Verfahren wesentliche Vorteile mit sich gebracht. So können die Schleif- und/oder Polierzeiten im Vergleich zu herkömmlichen Verfahren um mehr als 50% gesenkt werden. Die resultierenden Reparaturlackierungen heben sich optisch nicht mehr von den Originallackierungen ab. Ein Ausreißen oder Wegbrechen der Reparatur-Klarlackierung in den Auslaufzonen wird nicht mehr beobachtet. Die Reparaturlackierungen sind von so hoher Qualität, dass das betreffende Spot-Repair-Verfahren auch zur KFZ-Kleinstreparatur im Teil von Originallackierungen in der Linie beim Automobilhersteller eingesetzt werden kann. Aufgrund der hohen i.O.-Rate werden dadurch erhebliche wirtschaftliche Vorteile erzielt.

Allerdings ist der bei dem bekannten Spot-Repair-Verfahren eingesetzte Spotblender nicht in vollem Umfang dazu geeignet, in Spot-Repair-Verfahren verwendet zu werden, bei denen mit aktinischer Strahlung, vorzugsweise mit UV-Strahlung, insbesondere mit UV-A-Strahlung, härtbare Klarlacke eingesetzt werden (zu »aktinischer Strahlung« vgl. die deutschen Patentanmeldung DE 103 16 890 A1, Seite 6, Absatz [0035]).

Aus der internationalen Patentanmeldung WO 94/11123 ist ein mit UV-A-Strahlung härtbares, Iösemittelhaltiges Gemisch bekannt, das aus
6 bis 10 Teilen multifunktionelles Melaminacrylat,
5 bis 8 Teilen Polyetheraaylatoligomer,
9 bis 12 Teilen Epoxyacrylat,
6 bis 10 Teilen ethoxyliertes Trimethylolpropantriacrylat,
9 bis 12 Teilen Isodecylacrylat,
40 bis 60 Teilen Lösungsmittelgemisch aus Alkoholen, Glykolethern und Acetaten,
0,6 bis 1,2 Teilen p-Phenylbenzophenon,
0,1 bis 0,3 Teilen polyethermodifizierte Dimethylpolysiloxancopolymere und
4 bis 6 Teile Polysiloxanpolyetheroopolymer
besteht. Das bekannte Gemisch dient der Herstellung von kratzfesten Antibeschlag-Schichten.

Aus den deutschen Patentanmeldungen DE 100 48 849 A1, DE 102 02 565 A1 und DE 103 16 890 A1 sind mit UV-A-Strahlung härtbare, lösemittelhaltigen Gemische bekannt, die
- hydroxylgruppenhaltige Methacylatcopolymerisate,
- Dipentaerythritpentaacrylat,
- Lösemittel wie Butylacetat Ethoxyethylpropionat, Methylisoamylketon und Solventnaphtha®,
- Irgacure® 184 der Firma Ciba Spezialitätenchemie (1-Hydroxy-cyclohexyl-phenyl-keton; weißes Pulver; Absorptionsmaxima bei Lambda = 240 bis 250 nm und 320 bis 335 nm)
- Lucirin® TPO der Firma BASF Aktiengesellschaft (Acylphosphinoxid; gebliches Pulver; Absorptionsmaximum bei Lambda = 380 nm),
- Netzmittel und
- Lichtschutzmittel
   enthalten. Diese Gemische werden ausschließlich zur Herstellung von thermisch und mit aktinischer Strahlung (Dual-Cure-)härtbaren Klarlacken verwendet, die auch als Reparatur-Klarlacke eingesetzt werden können. Die Gemische werden nicht als Spotblender in Spot-Repair-Verfahren eingesetzt.

Aus dem deutschen Patent DE 197 09 467 C1 sind mit UV -Strahlung härtbare, Iösemittelfreie Gemische bekannt, die beispielsweise
- hexafunktionelles Urethanacrylat,
- Hexandioldiacrylat und
- Irgacure® 184
   enthalten. Diese Gemische werden u. a. auch als Reparatur-Klarlacke verwendet. Sie können nicht als Spotblender in Spot-Repair-Verfahren eingesetzt werden.

Aufgabe der vorliegenden Erfindung ist es, ein neues, mit UV-A-Strahlung härtbares, Iösemittelhaltiges Gemisch bereitzustellen, das sich als Spotblender in Spot-Repair-Verfahren einsetzen lässt, bei denen
- physikalisch härtbare,
- thermisch härtbare,
- mit aktinischer Strahlung, vorzugsweise mit UV-Strahlung, insbesondere mit UV-A-Strahlung, härtbare oder
- Dual-Cure-härtbare Reparatur-Klarlacke,
   vorzugsweise mit UV-A-Strahlung oder thermisch und mit UV-A-Strahlung härtbare Reparatur-Klarlacke, Verwendung finden.

Das, mit UV-A-Strahlung härtbare, lösemittelhaltige Gemisch soll es ermöglichen, mit all diesen Reparatur-Klarlacken Spot-Repair-Verfahren durchzuführen, die Reparaturlackierungen liefern, die in sehr kurzer Zeit geschliffen und/oder poliert werden können, sich optisch nicht mehr von der Originallackierung abheben, kein Ausreißen oder Wegbrechen in den Auslaufzonen mehr zeigen und von so hoher Qualität sind, dass sie auch zur KFZ-Kleinstreparatur im Teil von Originallackierungen in der Linie verwendet werden können.

Demgemäß wurde das neue, mit UV-A-Strahlung härtbare, lösemittelhaltige Gemisch, bestehend aus
(A) 1 bis 50 Gew.-% mindestens eines mit UV-A-Strahlung härtbaren Bestandteils, ausgewählt aus der Gruppe, bestehend aus Monomeren (a1), enthaltend mindestens drei mit UV-A-Strahlung härtbare reaktive funktionelle Gruppen und mindestens eine isocyanatreaktive funktionelle Gruppe und Gemischen (a2) aus von isocyanatreaktiven funktionellen Gruppen freien Monomeren (a21), enthaltend mindestens zwei mit UV-A-Strahlung härtbare reaktive funktionelle Gruppen, und Monomeren (a22), enthaltend mindestens zwei mit UV-A-Strahlung härtbare reaktive funktionelle Gruppen und mindestens eine isocyanatreaktive funktionelle Gruppe;
(B) 0,01 bis 10 Gew.-% mindestens eines farblosen oder im Wesentlichen farblosen Photoinitiators mit mindestens einem Absorptionsmaximum im Wellenlängenbereich von Lambda = 300 bis 400 nm;
(C) 10 bis 70 Gew.-% mindestens eines Alkyl- und/oder Cycloalkylacetats mit 3 bis 10 Kohlenstoffatomen im Alkylrest und/oder im Cycloalkylrest;
(D) 10 bis 70 Gew.-% mindestens eines Alkoxyalkyl-, Alkoxycycloalkyl-, Cycloalkoxyalkyl- und/oder Cycloalkoxycycloalkylacetats;
(E) 0,001 bis 5 Gew.-% mindestens eines die Grenzflächenspannung herabsetzenden Bestandtells und
(F) 0 bis 50 Gew.-% mindestens eines Alkylaromaten mit mindestens zwei Alkytresten mit 1 bis 6 Kohlenstoffatomen im Molekül;
(G) 0 bis 50 Gew.-% mindestens eines von den Bestandteilen (A) bis (F) verschiedenen Zusatzstoffs;
   gefunden, das im Folgenden als «erfindungsgemäßes Gemisch» bezeichnet wird.

Außerdem wurde das Verfahren zur Herstellung eines mit UV-A-Strahlung härtbaren, Iösemittelhaltigen Gemischs gefunden, bei dem man die Bestandtelle (A) bis (E) sowie gegebenenfalls (F) und/oder (G) miteinander vermischt, wonach man die resultierende Mischung homogenisiert, und das im Folgenden als » erfindungsgemäßes Verfahren« bezeichnet wird.

Des Weiteren wurde die Verwendung des erfindungsgemäßen Gemischs oder des mit Hilfe des erfindungsgemäßen Verfahrens hergestellten, mit UV-A-Strahlung härtbaren, lösemittelhaltigen Gemischs als Spotblender oder als wesentlicher Bestandteil von Spotblender in Spot-Repair-Verfahren gefunden, was im Folgenden als » erfindungsgamäße Verwendung « bezeichnet wird.

Weitere Erfindungegegenstände gehen aus der Beschrelbung hervor.

Weitere Ausführungsformen der Erfindung finden sich in den Ansprüchen 2-15 und 18-21.

Im Hinblick auf den Stand der Technik war es überraschend und für den Fachmann nicht vorhersehbar, dass die Aufgabe, die der vorliegenden Erfindung zugrunde lag, mit Hilfe des erfindungsgemäßen Gemischs, des erfindungsgemäßen Verfahrens und der erfindungsgemäßen Verwendung gelöst werden konnte.

Insbesondere war es überraschend, dass sich das erfindungsgemäße Gemisch in seiner erfindungsgemäßen Verwendung als Spotblender oder als wesentlicher Bestandteil von Spotblender in Spot-Repair-Verfahren einsetzen ließ, bei denen
- physikalisch härtbare,
- thermisch härtbare,
- mit aktinischer Strahlung, vorzugsweise mit UV-Strahlung, insbesondere mit UV-A-Strahlung, härtbare oder
- Dual-Cure-härtbare Reparatur-Klarlacke,
   vorzugsweise mit UV-A-Strahlung oder thermisch und mit UV-A-Strahlung härtbare Reparatur-Klarlacke, Verwendung fanden.

Besonders überraschend war, dass das erfindungsgemäße Gemisch als wesentlicher Bestandteil Reparatur-Klarlacken zugesetzt werden konnte, wonach diese mit Vorteil als Spotblender eingesetzt werden konnten.

Das erfindungsgemäße Gemisch ermöglichte es, mit all diesen Reparatur-Klarlacken Spot-Repair-Verfahren durchzuführen, die Reparaturlackierungen lieferten, die in sehr kurzer Zeit geschliffen und/oder poliert werden konnten, sich optisch nicht mehr von der Originallackierung abhoben, kein Ausreißen oder Wegbrechen in den Auslaufzonen mehr zeigten und von so hoher Qualität waren, dass sie auch zur KFZ-Kleinstreparatur im Teil von Originallackierungen in der Linie verwendet werden konnten.

Das erfindungsgemäße Gemisch war daher außerordentlich breit anwendbar, und die erfindungsgemäße Verwendung brachte aufgrund der technischen Vorteile für die Lackierbetriebe und deren Kunden signifikante wirtschaftliche Vorteile mit sich.

Nicht zuletzt konnte das erfindungsgemäße Gemisch mit Hilfe des erfindungsgemäßen Verfahrens in einfacher und sehr gut reproduzierbarer Weise wirtschaftlich hergestellt werden.

Das erfindungsgemäße Gemisch ist mit UV-A-Strahlung härtbar. Bekanntermaßen wird unter UV-A-Strahlung UV-Strahlung eines Wellenlängenbereichs von Lambda = 300 bis 400 nm verstanden. Geeignete Lichtquellen für UV-A-Strahlung sind üblich und bekannt und werden beispielsweise in der deutschen Patentanmeldung DE 103 16 890 A1, Seite 17, Absätze [0128] bis [0130], oder in der internationalen Patentanmeldung WO94/11123, Seite 2, Zeile 35, bis Seite 3, Zeile 6, Seite 3, Zeilen 10 bis 15, und Seite 8, Zeilen 1 bis 14, beschrieben.

Das erfindungsgemäße Gemisch besteht aus den Bestandteilen (A), (B), (C), (D) und (E) sowie gegebenenfalls (F) und (G).

Der Bestandteil (A) ist mit UV-A-Strahlung härtbar und ist in dem erfindungsgemäßen Gemisch in einer Menge von 1 bis 50, vorzugsweise 5 bis 20 und insbesondere 7 bis 15 Gew.-% enthalten.

Der Bestandteil (A) wird aus der Gruppe, bestehend aus
- Monomeren (a1), enthaltend mindestens drei, vorzugsweise mindestens vier, bevorzugt mindestens fünf und insbesondere fünf mit UV-A-Strahlung härtbare reaktive funktionelle Gruppen und mindestens eine, insbesondere eine, isocyanatreaktive funktionelle Gruppe und
- Gemischen (a2) aus
   - von isocyanatreaktiven funktionellen Gruppen freien Monomeren (a21), enthaltend mindestens zwei, vorzugsweise mindestens drei, bevorzugt mindestens vier und insbesondere vier mit UV-A-Strahlung härtbare reaktive funktionelle Gruppen, und
   - Monomeren (a22), enthaltend mindestens zwei, vorzugsweise mindestens drei und insbesondere drei mit UV-A-Strahlung härtbare reaktive funktionelle Gruppen sowie mindestens eine und insbesondere eine isocyanatreaktive funktionelle Gruppe,
   ausgewählt.

Beispiele geeigneter mit UV-A-Strahlung härtbarer reaktiver funktioneller Gruppen sind die in der deutschen Patentanmeldung DE 103 16 890 A1, Seite 6, Absätze [0035] und [0039] bis [0041], beschriebenen reaktiven funktionellen Gruppen. Insbesondere werden Acrylatgruppen verwendet.

Beispiele geeigneter isocyanatreaktiver funktioneller Gruppen sind Hydroxylgruppen, Thiolgruppen sowie primäre und sekundäre Aminogruppen, insbesondere Hydroxylgruppen.

Ein Beispiel für ein besonders gut geeignetes Monomer (a1) ist Dipentaerythritpentaacrylat.

Ein Beispiel für ein besonders gut geeignetes Gemisch (a2) ist das Gemisch aus Pentaerythrittetraacrylat (a21) und Pentaerythrittriacrylat (a22).

Der Bestandteil (B) besteht aus mindestens einem Photoinitiator und vorzugsweise mindestens zwei, insbesondere zwei, Photoinitiatoren und ist in dem erfindungsgemäßen Gemisch in einer Menge von 0,01 bis 10, vorzugsweise 0,05 bis 5 und insbesondere 0,05 bis 3 Gew.-% enthalten.

Die Photoinitiatoren (B) sind farblos. Dies bedeutet, dass ihre Körperfarbe weiß ist (vgl. Römpp Lexikon Lacke und Druckfarben, Georg Thieme Verlag, Stuttgart New York, 1998, »Körperfarben« und »Unbuntpunkt«).

Die Photoinitiatoren (B) können indes auch im Wesentlichen farblos sein. Dies bedeutet, dass sie eine Eigenfarbe von geringer Buntheit, beispielsweise einen sehr schwachen Gelbton, aufweisen, die aber in den Konzentrationen, in denen die Photoinitiatoren (B) angewandt werden, keine Verfärbung der erfindungsgemäßen Gemische und der hiermit hergestellten Reparaturlackierungen bewirkt.

Die Photoinitiatoren (B) weisen mindestens ein Absorptionsmaximum im Wellenlängenbereich von Lambda = 300 bis 400, vorzugsweise 320 bis 390 und insbesondere 340 bis 380 nm auf.

Als Photoinitiatoren (B) kommen alle üblichen und bekannten Photoinitiatoren in Betracht, wie sie beispielsweise in der deutschen Patentanmeldung DE 103 16 890 A1, Seite 6, Absätze [0035] und [0036], oder in Römpp Lexikon Lacke und Druckfarben, Georg Thieme Verlag, Stuttgart, New York, 1998, »Photoinitiatoren«, beschrieben werden, sofern sie das oben genannte Eigenschaftsprofil aufweisen.

Beispiele besonders gut geeigneter Photoinitiatoren (B) sind 1-Hydroxy-cyclohexyl-phenyl-keton (Irgacure® 184 der Firma Ciba Spezialitätenchemie), 2,2-Dimethoxy-1,2-diphenylethan-1-on (Irgacure® 651 der Firma Ciba Spezialitätenchemie) und Diphenyl(2,4,6-trimethylbenzoyl)phosphinoxid (Darocur® 4265 der Firma Ciba Spezialitätenchemie), insbesondere Gemische von Irgacure® 184 und Irgacure® 651.

Der Bestandteil (C) wird aus der Gruppe, bestehend aus Alkyl- und/oder Cycloalkylacetaten mit 3 bis 10 Kohlenstoffatomen im Alkylrest und/oder im Cycloalkylrest, ausgewählt. Beispiele geeigneter Bestandteile (C) sind aus der deutschen Patentanmeldung DE 100 43 810 A1, Spalte 3, Absätze [0016] bis [0018], bekannt. Insbesondere wird Butylacetat verwendet.

Der Bestandteil (C) ist in dem erfindungsgemäßen Gemisch in einer Menge von 10 bis 70, vorzugsweise 15 bis 50 und insbesondere 20 bis 45 Gew.-% enthalten.

Der Bestandteil (D) wird aus der Gruppe, bestehend aus Alkoxyalkyl-, Alkoxycycloalkyl- , Cycloalkoxyalkyl- und/oder Cycloalkoxycycloalkylacetat, ausgewählt. Beispiele geeigneter Bestandteile (D) sind aus der deutschen Patentanmeldung DE 100 43 810 A1, Spalte 3, Absatz [0020], bis Spalte 4, Absatz [0025], bekannt. Insbesondere wird 1-Methoxypropylacetat verwendet.

Der Bestandteil (D) ist in dem erfindungsgemäßen Gemisch in einer Menge von 10 bis 70, vorzugsweise 15 bis 50 und insbesondere 20 bis 45 Gew.-% enthalten.

Der Bestandteil (E) ist mindestens eine die Grenzflächenspannung herabsetzende Verbindung, insbesondere mindestens ein Netzmittel (vgl. hierzu Römpp Lexikon Lacke und Druckfarben, Georg Thieme Verlag, Stuttgart, New York, 1998, »Netzmittel« und »Verlauf(hilfs)mittel«). Beispiele geeigneter Netzmittel sind aus der deutschen Patentanmeldung DE 100 43 810 A1, Spalte 4, Absatz [0032], bekannt. Insbesondere werden polyethermodifizierte Methylpolysiloxane verwendet. Sie werden unter der Marke Baysilone® OL 44 von der Firma Borchers vertrieben.

Der Bestandteil (E) ist in dem erfindungsgemäßen Gemisch in einer Menge von 0,001 bis 5, vorzugsweise 0,005 bis 2 und insbesondere 0,05 bis 1 Gew.-% enthalten.

Das erfindungsgemäße Gemisch kann bis zu 50 Gew.-% des Bestandteils (F) enthalten. Der Bestandteil (F) wird aus der Gruppe, bestehend aus Alkylaromaten mit mindestens zwei Alkylresten mit 1 bis 6 Kohlenstoffatomen im Molekül, ausgewählt. Beispiele geeigneter Bestandteile (F) sind aus der deutschen Patentanmeldung DE 100 43 810 A1, Spalte 4, Absatz [0027], bekannt. Insbesondere wird Xylol verwendet. Vorzugsweise ist der Bestandteil (F) in dem erfindungsgemäßen Gemisch in einer Menge von 5 bis 50, vorzugsweise 10 bis 30 und insbesondere 10 bis 25 Gew.-% enthalten.

Darüber hinaus kann das erfindungsgemäße Gemisch bis zu 50 Gew.-% mindestens eines von den Bestandteilen (A) bis (F) verschiedenen Zusatzstoffs (G) enthalten. Vorzugsweise werden die Zusatzstoffe aus der Gruppe, bestehend aus Lichtschutzmitteln, wie UV-Absorbern und reversiblen Radikalfänger (HALS); Antioxidantien; lacküblichen Lösemitteln; Bioziden und Katalysatoren für die thermische Vernetzung, ausgewählt. Die eingesetzte Menge des Zusatzstoffs (G) kann daher von Zusatzstoff zu Zusatzstoff (G) sehr breit variieren. Bevorzugt werden Katalysatoren für die thermische Vernetzung, besonders bevorzugt Katalysatoren der Reaktion von Isocyanatgruppen mit isocyanatreaktiven funktionellen Gruppen, ganz besonders bevorzugt Bismut- und/oder Zinnverbindungen, insbesondere Dibutylzinndilaurat, verwendet.

Die Katalysatoren (G) für die Reaktion von Isocyanatgruppen mit isocyanatreaktiven funktionellen Gruppen werden vorzugsweise in den erfindungsgemäßen Gemischen verwendet, die als Spotblender in Spot-Repair-Verfahren eingesetzt werden, bei denen thermisch härtbare oder Dual-Cure-härtbare Reparatur-Klarlacke zur Anwendung gelangen, die aus Polyisocyanaten enthaltenden Mehrkomponentensystemen, insbesondere Zweikomponentensystemen, hergestellt worden sind. In solchen Fällen ist der Katalysator (G) in dem erfindungsgemäßen Gemisch in einer Menge von 0,01 bis 2, vorzugsweise 0,03 bis 1 und insbesondere 0,05 bis 0,5 Gew.-% enthalten.

Werden die erfindungsgemäßen Gemische indes als Spotblender in Spot-Repair-Verfahren eingesetzt, bei denen physikalisch härtbare, thermisch härtbare, mit aktinischer Strahlung härtbare oder Dual-Cure-härtbare Einkomponenten -Reparatur-Klarlacke zur Anwendung gelangen, kann auf die Katalysatoren (G) verzichtet werden.

Vorzugsweise wird das erfindungsgemäße Gemisch mit Hilfe des erfindungsgemäßen Verfahrens hergestellt. Bei dem erfindungsgemäßen Verfahren werden die vorstehend beschriebenen Bestandteile (A) bis (E) sowie gegebenenfalls (F) und/oder (G) miteinander vermischt, wonach man die resultierende Mischung homogenisiert. Bevorzugt werden dabei die üblichen und bekannten Mischverfahren und Vorrichtungen wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer vorzugsweise unter Ausschluß von aktinischer Strahlung, eingesetzt.

Das erfindungsgemäße Gemisch kann an und für sich zahlreichen Anwendungszwecken dienen. Insbesondere wird es im Rahmen der erfindungsgemäßen Verwendung als Spotblender in einem Spot-Repair-Verfahren oder zur Herstellung eines solchen Spotblender eingesetzt.

Das erfindungsgemäße Spot-Repair-Verfahren umfasst die folgenden Verfahrensschritte:
(1) Reinigung der Schadstelle und ihrer Umgebung,
(2) Schleifen und erneute Reinigung der Schadstelle,
(3) gegebenenfalls Spachteln, Schleifen und Reinigen der Schadstelle,
(4) Applikation eines Füllers und Ablüften der resultierenden Füllerschicht oder alternativ Härten der Füllerschicht und Schleifen und Reinigen der resultierenden Füllerlackierung,
(5) Applikation eines Basislacks auf der Füllerschicht oder der Füllerlackierung, Ablüften der resultierenden Basislackschicht und gegebenenfalls Entfernen des Overspray,
(6) Nass-in-nass-Applikation eines Klarlacks auf die Basislackschicht,
(7) Applikation eines Spotblenders und
(8) Härten der applizierten Schichten,

Für das erfindungsgemäße Spot-Repair-Verfahren ist es vorteilhaft, dass der Basislack durch pneumatische Applikation mit einer Sprühpistole deckend von außen, d. h. von der Originallackierung her, nach innen, d. h. zum Zentrum der Schadstelle hin, aufgetragen wird. Außerdem ist es wesentlich dass man als Spotblender das vorstehend im Detail beschriebene erfindungsgemäße Gemisch verwendet.

Für die pneumatische Applikation der Beschichtungsstoffe können an und für sich übliche und bekannte Sprühpistolen verwendet werden. Erfindungsgemäß ist es indes von Vorteil, kleinere Sprühpistolen als die üblichen und bekannten zu verwenden. Solche kleindimensionierten Sprühpistolen sind von der Firma SATA, Kornwestheim, unter dem Handelsnamen SATA minijet 2 HVLP SR (Spot-Repair) erhältlich.

Für die Reinigung und das Schleifen können die Reinigungsgeräte und -flüssigkeiten sowie Schleif- und/oder Poliergeräte verwendet werden, wie sie üblicherweise für die Kraftfahrzeugreparaturlackierung eingesetzt werden.

Für das Spachteln können übliche und bekannte Spachtel, insbesondere mit UV-Strahlung härtbare Spachtel, wie die der Firma BASF Coatings AG angewandt werden.

Als Füller kommen übliche und bekannte wässrige und konventionelle Füller in Betracht, wie sie beispielsweise in den Patenten und Patentanmeldungen US 4,537,926 A , EP 0 529 335 A1, EP 0 595 186 A1, EP 0 639 660 A1, DE 44 38 504 A1, DE 43 37 961 A1, WO 89,/10387, US 4,450,200 A , US 4,614,683 A oder WO 94/26827 beschrieben werden. Es können auch mit UV-Strahlung härtbare Füller eingesetzt werden.

Die Füller sind handelsübliche Produkte, die beispielsweise von der Firma BASF Coatings AG unter der Marke Glasurit® 1 K-Grundfüller 76-71 vertrieben werden.

Beispiele geeigneter konventioneller oder wäßriger Basislacke sind aus den Patentanmeldungen EP 0 089 497 A1, EP 0 256 540 A1, EP 0 260 447 A1, EP 0 297 576 A1, WO 96/12747, EP 0 523 610 A1, EP 0 228 003 A1, EP 0 397 806 A1, EP 0 574 417 A1, EP 0 531 510 A1, EP 0 581 211 A1, EP 0 708 788 A1, EP 0 593 454 A1, DE-A-43 28 092 A1, EP 0 299 148 A1, EP 0 394 737 A1, EP 0 590 484 A1, EP 0 234 362 A1, EP 0 234 361 A1, EP 0 543 817 A1, WO 95/14721, EP 0 521 928 A1, EP0522420A1, EP0522419A1, EP 0 649 865 A1, EP 0 536 712 A1, EP 0 596 460 A1, EP 0 596 461 A1, EP 0 584 818 A1, EP 0 669 356 A1, EP 0 634 431 A1, EP 0 678 536 A1, EP 0 354 261 A1, EP 0 424 705 A1, WO 97/49745, WO 97/49747, EP 0 401 565 A1 oder EP 0 817 684, Spalte 5, Zeilen 31 bis 45, bekannt. Es können auch die Basislacke auf der Grundlage des Mischsystems verwendet werden, das in der europäischen Patentanmeldung EP 0 578 645 A1 beschrieben wird.

Die Basislacke sind handelsübliche Produkte, die beispielsweise von der Firma BASF Coatings AG unter den Marken Glasurit® Decklack-Reihe 55 mit Glasurit® Einstellenzusatz 352-91 oder Glasurit® Decklack-Reihe 90 mit Glasurit® Einstellenzusatz 93-E 3 und Glasurit® Beispritzlack 90-M5 gemäß der europäischen Patentanmeldung EP 0 578 645 A1 vertrieben werden.

Es ist ein ganz besonderer Vorteil des erfindungsgemäßen Gemischs und seiner erfindungsgemäßen Verwendung, dass im Rahmen des erfindungsgemäßen Spot - Repair-Verfahrens
- physikalisch härtbare,
- thermisch härtbare,
- mit aktinischer Strahlung, vorzugsweise mit UV-Strahlung, insbesondere mit UV-A-Strahlung, härtbare oder
- Dual-Cure-härtbare Reparatur-Klarlacke,
   vorzugsweise mit UV-A-Strahlung oder thermisch und mit UV-A-Strahlung (Dual-Cure-) härtbare Reparatur-Klarlacke, eingesetzt werden können.

Im Rahmen der vorliegenden Erfindung bedeutet der Begriff »physikalische Härtung« die Härtung einer Schicht aus einem Reparatur-Klarlacke durch Verfilmung, wobei die Verknüpfung innerhalb der Schicht über Schlaufenbildung der Polymermoleküle der vorhandenen Bindemittel erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275). Somit kann die physikalische Härtung gegebenenfalls auch die Härtung der Reparatur-Klarlacke durch Hitze oder durch Bestrahlen mit aktinischer Strahlung unterstützen.

Die thermisch härtbaren Reparatur-Klarlacke können selbst vernetzend und/oder fremd vernetzend sein.

Im Rahmen der vorliegenden Erfindung bezeichnet der Begriff »selbst vernetzend« die Eigenschaft eines im Reparatur-Klarlack vorhandenen Bindemittels (zu dem Begriff vgl. Römpp Lexikon Lacke und Druckfarben, Georg Thieme Verlag, Stuttgart, New York, 1998, »Bindemittel«, Seiten 73 und 74) mit sich selbst Vernetzungsreaktionen einzugehen. Voraussetzung hierfür ist, dass in den Bindemitteln bereits beide Arten von komplementären reaktiven funktionellen Gruppen enthalten sind, die für eine Vernetzung notwendig sind, oder reaktive funktionelle Gruppen, die "mit sich selbst" reagieren.

Als fremd vernetzend werden dagegen solche Reparatur-Klarlacke, bezeichnet, worin eine Art der komplementären reaktiven funktionellen Gruppen in dem vorhandenen Bindemittel und die andere Art in einem vorhandenen Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen. Beispiele geeigneter komplementärer reaktiver funktioneller Gruppen sind aus der Patentanmeldung DE 100 42 152 A1, Seite 7, Absatz [0078], bis Seite 9, Absatz [0081], bekannt.

Die Reparatur-Klarlacke können auch nur mit aktinischer Strahlung härtbar sein. Hierbei erfolgt die Härtung über die vorstehend beschriebenen Gruppen, die Bindungen enthalten, die mit aktinischer Strahlung aktivierbar sind.

Die Reparatur-Klarlacke sind vorzugsweise thermisch und mit aktinischer Strahlung härtbar.

Beispiele geeigneter mit UV-Strahlung härtbarer Reparatur-Klarlacke sind aus dem deutschen Patent DE 197 09 467 C1 bekannt.

Bevorzugt werden die Dual-Cure-härtbaren Reparatur-Klarlacke aus Mehrkomponentensystemen, insbesondere Zweikomponentensystemen, die Polyisocyanate als Härter enthalten, hergestellt. Beispiele geeigneter Dual-Curehärtbarer Reparatur-Klarlacke sind aus den deutschen Patentanmeldungen DE 103 16 890 A1, DE 103 00 798 A1, DE 102 02 565 A1, DE 100 42 152 A1, DE 102 04 114 A1, DE 100 48 847 A1, DE 100 48 849 A1, DE 100 48 275 A1 oder DE 100 48 670 A1 bekannt. Ein Beispiel für einen besonders gut geeigneten Dual-Cure-härtbaren Reparatur-Klarlack ist der Reparatur-Klarlack, der aus dem von BASF Coatings AG vertriebenen Mehrkomponentensystem, das 2K UVA Klarlack, Glasurit® VOC-Decklack-Härter kurz 929-31 und Glasurit® Einstellzusatz 352-91 umfasst, hergestellt wird.

Ein weiterer ganz besonderer Vorteil des erfindungsgemäßen Gemischs und seiner erfindungsgemäßen Verwendung besteht darin, dass im Rahmen des erfindungsgemäßen Spot-Repair-Verfahrens das erfindungsgemäße Gemisch den jeweils verwendeten Reparatur-Klarlacken zugesetzt werden kann, wonach die resultierenden Gemische wiederum als Spotblender eingesetzt werden können. Dadurch resultiert eine herausragende Haftung des Spotblender auf den Reparaturlackierungen und den Originallackierungen.

Die thermische Härtung der bei dem erfindungsgemäßen Spot-Repair-Verfahren applizierten Beschichtungsstoffe und des applizierten erfindungsgemäßen Gemischs weist keine Besonderheiten auf, sondern erfolgt mit üblichen und bekannten Vorrichtungen, wie Heizgebläsen sowie Heizstrahlern, die nahes und fernes Infrarot abstrahlen. Die angewandten Temperaturen und die Dauer der Erwärmung richten sich nach den Erfordernissen des Einzelfalls, insbesondere nach der Reaktivität der thermisch härtbaren Bestandteile, und können vom Fachmann in einfacher Weise aufgrund seines allgemeinen Fachwissens und seines handwerklichen Könnens ausgewählt und eingestellt werden.

Die Härtung der bei dem erfindungsgemäßen Spot-Repair-Verfahren applizierten Dual-Cure-härtbaren Reparatur-Klarlacke und dem applizierten erfindungsgemäßen Gemisch mit UV-A-Strahlung weist ebenfalls keine Besonderheiten auf, sondern erfolgt mit den üblichen und bekannten Lichtquellen, wie sie eingangs beschrieben werden. Schattenzonen können dabei mit Hilfe von Aluminiumfolien als Spiegel oder Reflektoren belichtet werden. Die Dauer der Belichtung und die eingestrahlte Strahlendosis richtet sich nach den Erfordernissen des Einzelfalls, insbesondere nach der Reaktivität der mit UV-A-Strahlung härtbaren Bestandteile, und können vom Fachmann in einfacher Weise aufgrund seines allgemeinen Fachwissens und seines handwerklichen Könnens ausgewählt und eingestellt werden.

Die UV-A-Lichtquellen können in üblicher und bekannter Weise mit Filtern versehen sein, sodass die Härtung der applizierten Dual-Cure-härtbaren Reparatur-Klarlacke abwechselnd mit IR-Strahlung, d. h. thermisch, und mit UV-A-Strahlung erfolgen kann.

Das erfindungsgemäße Spot-Repair-Verfahren eignet sich insbesondere für den Spot-Repair von Schäden bis 4 bis 5 cm Durchmesser. Die Schadstelle soll ohne Deformationen wie Beulen, Kratzer oder Steinschläge sein. Besonders empfehlenswert ist der Spot-Repair an stehenden Flächen. Bei liegenden Flächen wird das Spot-Repair-Verfahren vorteilhafterweise im Nahbereich von Kanten (Abstand bis zu 15 cm) angewandt.

Die erfindungsgemäße Verwendung und das erfindungsgemäße Spot-Repair-Verfahren liefern Reparaturlackierungen die in sehr kurzer Zeit geschliffen und/oder poliert werden können, sich optisch nicht mehr von der Originallackierung abheben, kein Ausreißen oder Wegbrechen in den Auslaufzonen mehr zeigen und von so hoher Qualität sind, dass sie auch zur KFZ-Kleinstreparatur im Teil von Originallackierungen in der Linie verwendet werden können.

Völlig überraschend ist dabei das Ergebnis, dass durch die erfindungsgemäße Verwendung und das erfindungsgemäße Spot-Repair-Verfahren Vermattungen und ähnliche Lackstörungen von Reparatur-Basislackierungen, die plättchenförmige Aluminiumeffektpigmente enthalten, völlig vermieden werden können.

### Beispiele

### Beispiel 1

Die Herstellung des mit UV-A-Strahlung härtbaren, lösemittelhaltigen Gemischs 1

In einem geeigneten Rührgefäß wurden unter Ausschluss von aktinischer Strahlung 36 Gewichtsteile Butylacetat, 36 Gewichtsteile 1-Methoxypropylacetat, 16,4 Gewichtsteile Xylol, 0,3 Gewichtsteile Netzmittel (Baysilone® OL 44 der Firma Borchers, 10-prozentig), 10 Gewichtsteile Dipentaerythritpentaacrylat, 0,1 Gewichtsteile 2,2-Dimethoxy-1,2-diphenylethan-1-on (Irgacure® 651 der Firma Ciba Spezialitätenchemie), 0,2 Gewichtsteile in 1-Hydroxy-cyclohexyl-phenyl- keton (Irgacure® 184 der Firma Ciba Spezialitätenchemie) und 1,0 Gewichtsteile Dibutylzinndilaurat (10-prozentig) miteinander vermischt und die resultierende Mischung homogenisiert. Das resultierende Gemisch 1 konnte unter Ausschluss von aktinischer Strahlung problemlos gelagert und zu den Anwendern transportiert werden. Es war hervorragend als Spotblender für Spot-Repair-Verfahren, bei denen die unterschiedlichsten Reparatur-Klarlacke zur Anwendung kamen, geeignet.

### Beispiel 2

KFZ-Kleinstreparatur im Teil (Spot-Repair)

### Lackschaden:

Bei der zur reparierenden Schadstelle handelte es sich um einen 4 bis 5 cm langen Kratzer in einer silbermetallic lackierten PKW-Tür, der durch einen Schlüssel verursacht worden war und zum Teil bis zum Substrat hinunter reichte.

### Maßnahmen:

Es wurden die nachstehend angegebenen Vorrichtungen, Stoffe und Verfahrenschritte in der angegebenen Reihenfolge angewandt.

### Reinigen:

1. Sprühdose mit Teroson® Intensiv-Scheibenreiniger
2. Finish-Kontrollspray 55535 der Firma 3M
3. Sprühflasche mit Nitroverdünnung M600 der Firma Akzo
4. Putztücher Kimberley Clark Classic®

### Schleifen:

Lackpfeile®
Schleifblüte® P 1500 der Firma 3M

### Spachteln:

Spachtel der Firma BASF Coatings AG
Ablüftzeit: 10 Minuten/20°C
Schleifen: nass (Sprühflasche) mit Schleifblüte® P 1000 der Firma 3M

### Abkleben:

Papier und Abdeckband der Firma 3M

### Basislack:

Glasurit® Zweischicht Decklack Reihe 90 mit silbermetallic-Effekt der Firma BASF Coatings AG
Sprühpistole: SATA minijet 2 HVLP SR; Spritzdruck: 1,5 bar
Schadstelle von außen zum Zentrum hin deckend und auslaufend großflächig in die Fläche gespritzt
Ablüften: zwei bis drei Minuten nach jedem Spritzgang
Abwischen mit Staubbindetuch

### Mit UV-A-Strahlung härtbarer Klarlack:

Glasurit® 2K UVA Klarlack und Glasurit® VOC-Decklack-Härter kurz 929-31 im Verhältnis von 2: 1 + 10% Glasurit® Einstellzusatz 352-91
Sprühpistole: SATA minijet 2 HVLP SR; Spritzdruck: 1,5 bar
Schadstelle von außen zum Zentrum hin auslaufend großflächig in zwei Spritzgängen in die Fläche gespritzt
Ablüften: zwei bis drei Minuten nach jedem Spritzgang
Mit UV-A-Strahlung härtbarer Spotblender:
   Gemisch 1 gem. Beispiel 1
   Sprühpistole: SATA minijet 2 HVLP SR; Spritzdruck: 1,5 bar
   Spotblender über die Auslaufzonen des Klarlacks gespritzt

### Härtung:

### Hintereinander:

1. thermische Härtung mit kurzwelliger Infrarotstrahlung während drei Minuten
2. Strahlenhärtung mit UV-A-Strahlung (Strahlendosis: 4.000 mJ/cm²)

Die resultierende Reparaturlackierung war sofort polierbar, sehr leicht zu polieren und optisch und mechanisch hervorragend an die Originallackierung angepasst. Es waren keine Vermattungen oder andere Lackstörungen zu beobachten.

## Patentansprüche

1. Mit UV-A-Strahlung härtbares, Iösamittelhaltiges Gemisch, bestehend aus
(A) 1 bis 50 Gew.-% mindestens eines mit UV-A-Strahlung härtbaren Bestandteils, ausgewählt aus der Gruppe, bestehend aus Monomeren (a1), enthaltend mindestens drei mit UV-A-Strahlung härtbare reaktive funktionelle Gruppen und mindestens eine isocyanatreaktive funktionelle Gruppe und Gemischen (a2) aus von Isocyanatreaktiven funktionellen Gruppen freien Monomeren (a21), enthaltend mindestens zwei mit UV-A-Strahlung härtbare reaktive funktionelle Gruppen, und Monomeren (a22), enthaltend mindestens zwei mit UV-A-Strahlung härtbare reaktive funktionelle Gruppen und mindestens eine isocyanatreaktive funktionelle Gruppe;
(B) 0,01 bis 10 Gew.-% mindestens eines farblosen oder im Wesentlichen farblosen Photoinitiators mit mindestens einem Absorptionsmaximum Im Wellenlängenbereich von Lambda = 300 bis 400 nm;
(C) 10 bis 70 Gew.-% mindestens eines Alkyl- und/oder Cycloalkylacetats mit 3 bis 10 Kohienstoffatomen im Alkylrest und/oder im Cycloalkylrest;
(D) 10 bis 70 Gew.-% mindestens eines Alkoxyalkyl-, Alkoxycycloalkyl-, Cycloalkoxyalkyl- und/oder Cycloalkoxycycloalkylacetats;
(E) 0,001 bis 5 Gew.-% mindestens eines die Grenzflächenspannung herabsetzenden Bestandteils;
(F) 0 bis 50 Gew.-% mindestens eines Alkylaromaten mit mindestens zwei Alkylresten mit 1 bis 6 Kohlenstoffatomen im Molekül; und
(G) 0 bis 50 Gew.-% mindestens eines von den Bestandteilen (A) bis (F) verschiedenen Zusatzstoffs.

2. Gemisch nach Anspruch 1, **dadurch gekennzeichnet, dass** das Monomer (a1) mindestens vier mit UV-A-Strahlung härtbare reaktive funktionelle Gruppen enthält.

3. Gemisch nach Anspruch 1 oder 2, **dadurch gekennzeichnet, dass** das Monomer (a1) eine isocyanatreaktive funktionelle Gruppe enthält.

4. Gemisch nach einem der Ansprüche 1 bis 3, **dadurch gekennzeichnet, dass** das Monomer (a21) mindestens drel mit UV-A-Strahlung härtbare reaktive funktionelle Gruppen enthält.

5. Gemisch nach einem der Ansprüche 1 bis 4, **dadurch gekennzeichnet, dass** das Monomer (a22) eine isocyanatreaktive funktionelle Gruppe enthält.

6. Gemisch nach einem der Ansprüche 1 bis 6, **dadurch gekennzeichnet, dass** das Monomer (a21) mindestens vier mit UV-A-Strahlung härtbare reaktive funktionelle Gruppen enthält.

7. Gemisch nach einem der Ansprüche 1 bis 6, **dadurch gekennzeichnet, dass** die mit UV-A-Strahlung härtbaren reaktiven funktionellen Gruppen Acrylatgruppen sind.

8. Gemisch nach einem der Ansprüche 1 bis 7, **dadurch gekennzeichnet, dass** die isocyanatreaktiven funktionellen Gruppen Hydroxylgruppen sind.

9. Gemisch nach einem der Ansprüche 1 bis 8, **dadurch gekennzeichnet, dass** das Gemisch den Bestandteil (A) in einer Menge von 5 bis 20 Gew.-% enthält.

10. Gemisch nach einem der Ansprüche 1 bis 9, **dadurch gekennzeichnet, dass** das Gemisch den Photoinitiator (B) in einer Menge von 0,05 bis 5 Gew.-% enthält.

11. Gemisch nach einem der Ansprüche 1 bis 10, **dadurch gekennzeichnet, dass** der Photoinitiator (B) mindestens ein Absorptionsmaximum im Wellenlängenbereich von Lambda = 320 bis 390 nm aufweist.

12. Gemisch nach einem der Ansprüche 1 bis 11, **dadurch gekennzeichnet, dass** das Gemisch den Bestandteil (C) in einer Menge von 15 bis 50 Gew.-% enthält.

13. Gemisch nach einem der Ansprüche 1 bis 12, **dadurch gekennzeichnet, dass** das Gemisch den Bestandteil (D) in einer Menge von 15 bis 50 Gew.-% enthält.

14. Gemisch nach einem der Ansprüche 1 bis 13, **dadurch gekennzeichnet, dass** das Gemisch den Bestandteil (F) in einer Menge von 10 bis 30 Gew.-% enthält.

15. Gemisch nach einem der Ansprüche 1 bis 14, **dadurch gekennzeichnet, dass** das Gemisch den Bestandteil (E) in einer Menge von 0,005 bis 2 Gew. -% enthält.

16. Gemisch nach einem der Ansprüche 1 bis 15, **dadurch gekennzeichnet, dass** der Bestandteil (G) aus der Gruppe, bestehend aus Lichtschutzmitteln, Antioxidantien, lacküblichen Lösemitteln, Bioziden und Katalysatoren für die thermische Vernetzung, die von den Bestandteilen (A) bis (F) verschiedenen sind, ausgewählt ist.

17. Gemisch nach einem der Ansprüche 1 bis 15, **dadurch gekennzeichnet, dass** das der Bestandteil (G) ein Katalysator für die thermische Vernetzung ist.

18. Verfahren zur Herstellung eines mit UV-A-Strahlung härtbaren, Iösemittelhaltigen Gemischs gemäß einem der Ansprüche 1 bis 17, **dadurch gekennzeichnet, dass** man seine Bestandteile (A) bis (E) sowie gegebenenfalls (F) und/oder (G) miteinander vermischt und die Mischung homogenlslert.

19. Verfahren nach Anspruch 18, **dadurch gekennzeichnet, dass** das Verfahren unter Ausschluss von aktinischer Strahlung durchgeführt wird.

20. Verwendung des mit UV-A-Strahlung härtbaren, Iösemittelhaltigen Gemischs gemäß einem der Ansprüche 1 bis 17 und des mit Hilfe des Verfahrens gemäß Anspruch 18 oder 19 hergestellten, mit UV-A-Strahlung härtbaren, Iösemittelhaltigen Gemischs als Spotblender in der Kraftfahrzeugreparaturlacklerung oder zur Herstellung eines solchen Spotblenders.

21. Verwendung nach Anspruch 20, **dadurch gekennzeichnet, dass** das mit UV-A-Strahlung härtbare, Iösemittelhaltige Gemisch dem jeweils verwendeten ReparaturKlarlack zugesetzt wird, wonach das Gemisch als Spotblender eingesetzt wird.

## Claims

1. UV-A-curable, solvent-containing composition composed of
(A) 1% to 50% by weight of at least one UV-A-curable constituent selected from the group consisting of monomers (a1) containing at least three UV-A-curable reactive functional groups and at least one isocyanate-reactive functional group and mixtures (a2) of monomers (a21) that are free from isocyanate-reactive functional groups and contain at least two UV-A-curable reactive functional groups, and monomers (a22) that contain at least two UV-A-curable reactive functional groups and at least one isocyanate-reactive functional group;
(B) 0.01% to 10% by weight of at least one colorless or substantially colorless photoinitiator having at least one absorption maximum in the wavelength range of lambda = 300 to 400 nm;
(C) 10% to 70% by weight of at least one alkyl and/or cycloalkyl acetate having 3 to 10 carbon atoms in the alkyl radical and/or in the cycloalkyl radical;
(D) 10% to 70% by weight of at least one alkoxyalkyl, alkoxycycloalkyl, cycloalkoxyalkyl and/or cycloalkoxycycloalkyl acetate;
(E) 0.001% to 5% by weight of at least one constituent that lowers the interfacial tension;
(F) 0 to 50% by weight of at least one alkylaromatic having at least two alkyl radicals having 1 to 6 carbon atoms in the molecule; and
(G) 0 to 50% by weight of at least one additive different from constituents (A) to (F).

2. Composition according to Claim 1, **characterized in that** the monomer (a1) contains at least four UV-A-curable reactive functional groups.

3. Composition according to Claim 1 or 2, **characterized in that** the monomer (a1) contains one isocyanate-reactive functional group.

4. Composition according to any one of Claims 1 to 3, **characterized in that** the monomer (a21) contains at least three UV-A-curable reactive functional groups.

5. Composition according to any one of Claims 1 to 4, **characterized in that** the monomer (a22) contains an isocyanate-reactive functional group.

6. Composition according to any one of Claims 1 to 5, **characterized in that** the monomer (a21) contains at least four UV-A-curable reactive functional groups.

7. Composition according to any one of Claims 1 to 6, **characterized in that** the UV-A-curable reactive functional groups are acrylate groups.

8. Composition according to any one of Claims 1 to 7, **characterized in that** the isocyanate-reactive functional groups are hydroxyl groups.

9. Composition according to any one of Claims 1 to 8, **characterized in that** the composition contains constituent (A) in an amount of 5% to 20% by weight.

10. Composition according to any one of Claims 1 to 9, **characterized in that** the composition contains photoinitiator (B) in an amount of 0.05% to 5% by weight.

11. Composition according to any one of Claims 1 to 10, **characterized in that** the photoinitiator (B) has at least one absorption maximum in the wavelength range of lambda = 320 to 390 nm.

12. Composition according to any one of Claims 1 to 11, **characterized in that** the composition contains constituent (C) in an amount of 15% to 50% by weight.

13. Composition according to any one of Claims 1 to 12, **characterized in that** the composition contains constituent (D) in an amount of 15% to 50% by weight.

14. Composition according to any one of Claims 1 to 13, **characterized in that** the composition contains constituent (F) in an amount of 10% to 30% by weight.

15. Composition according to any one of Claims 1 to 14, **characterized in that** the composition contains constituent (E) in an amount of 0.005% to 2% by weight.

16. Composition according to any one of Claims 1 to 15, **characterized in that** constituent (G) is selected from the group consisting of light stabilizers, antioxidants, customary paint solvents, biocides and thermal crosslinking catalysts which are different from constituents (A) to (F).

17. Composition according to any one of Claims 1 to 15, **characterized in that** constituent (G) is a thermal crosslining catalyst.

18. Process for preparing a UV-A-curable, solvent-containing composition according to any one of Claims 1 to 17, **characterized in that** its constituents (A) to (E) and also, where appropriate, (F) and/or (G) are mixed with one another and the mixture is homogenized.

19. Process according to Claim 18, **characterized in that** the process is carried out in the absence of actinic radiation.

20. Use of the UV-A-curable, solvent-containing composition according to any one of Claims 1 to 17 and of the UV-A-curable, solvent-containing composition prepared by means of the process according to Claim 18 or 19 as a spot blender in automotive refinishing or for preparing such a spot blender.

21. Use according to Claim 20, **characterized in that** the UV-A-curable, solvent-containing composition is added to the particular refinish clearcoat material used, and then the mixture is used as a spot blender.

## Revendications

1. Mélange durcissable par un rayonnement UV-A, contenant un solvant, constitué par
(A) 1 à 50% en poids d'au moins un constituant durcissable par un rayonnement UV-A, choisi dans le groupe constitué par des monomères (a1), contenant au moins trois groupes fonctionnels réactifs durcissables par un rayonnement UV-A et au moins un groupe fonctionnel réactif avec isocyanate et des mélanges (a2) de monomères exempts de groupes fonctionnels réactifs avec isocyanate (a21), contenant au moins deux groupes fonctionnels réactifs durcissables par un rayonnement UV-A, et de monomères (a22), contenant au moins deux groupes fonctionnels réactifs durcissables par un rayonnement UV-A et au moins un groupe fonctionnel réactif avec isocyanate ;
(B) 0,01 à 10% en poids d'au moins un photo-initiateur incolore ou essentiellement incolore présentant au moins un maximum d'absorption dans la plage des longueurs d'onde de Lambda = 300 à 400 nm ;
(C) 10 à 70% en poids d'au moins un acétate d'alkyle et/ou de cycloalkyle comprenant 3 à 10 atomes de carbone dans le radical alkyle et/ou cycloalkyle ;
(D) 10 à 70% en poids d'au moins un acétate d'alcoxyalkyle, d'alcoxycycloalkyle, de cycloalcoxyalkyle et/ou de cycloalcoxycycloalkyle ;
(E) 0,001 à 5% en poids d'au moins un constituant diminuant la tension superficielle ;
(F) 0 à 50% en poids d'au moins un aromatique d'alkyle comprenant au moins deux radicaux alkyle comprenant 1 à 6 atomes de carbone dans la molécule ; et
(G) 0 à 50% en poids d'au moins un additif différent des constituants (A) à (F).

2. Mélange selon la revendication 1, **caractérisé en ce que** le monomère (a1) contient au moins quatre groupes fonctionnels réactifs durcissables par un rayonnement UV-A.

3. Mélange selon la revendication 1 ou 2, **caractérisé en ce que** le monomère (a1) contient un groupe fonctionnel réactif avec isocyanate.

4. Mélange selon l'une quelconque des revendications 1 à 3, **caractérisé en ce que** le monomère (a21) contient au moins trois groupes fonctionnels réactifs durcissables par un rayonnement UV-A.

5. Mélange selon l'une quelconque des revendications 1 à 4, **caractérisé en ce que** le monomère (a22) contient un groupe fonctionnel réactif avec isocyanate.

6. Mélange selon l'une quelconque des revendications 1 à 5, **caractérisé en ce que** le monomère (a21) contient au moins quatre groupes fonctionnels réactifs durcissables par un rayonnement UV-A.

7. Mélange selon l'une quelconque des revendications 1 à 6, **caractérisé en ce que** les groupes fonctionnels réactifs durcissables par un rayonnement UV-A sont des groupes acrylate.

8. Mélange selon l'une quelconque des revendications 1 à 7, **caractérisé en ce que** les groupes fonctionnels réactifs avec isocyanate sont des groupes hydroxyle.

9. Mélange selon l'une quelconque des revendications 1 à 8, **caractérisé en ce que** le mélange contient le constituant (A) en une quantité de 5 à 20% en poids.

10. Mélange selon l'une quelconque des revendications 1 à 9, **caractérisé en ce que** le mélange contient le photo-initiateur (B) en une quantité de 0,05 à 5% en poids.

11. Mélange selon l'une quelconque des revendications 1 à 10, **caractérisé en ce que** le photo-initiateur (B) présente au moins un maximum d'absorption dans la plage des longueurs d'onde de Lambda = 320 à 390 nm.

12. Mélange selon l'une quelconque des revendications 1 à 11, **caractérisé en ce que** le mélange contient le constituant (C) en une quantité de 15 à 50% en poids.

13. Mélange selon l'une quelconque des revendications 1 à 12, **caractérisé en ce que** le mélange contient le constituant (D) en une quantité de 15 à 50% en poids.

14. Mélange selon l'une quelconque des revendications 1 à 13, **caractérisé en ce que** le mélange contient le constituant (F) en une quantité de 10 à 30% en poids.

15. Mélange selon l'une quelconque des revendications 1 à 14, **caractérisé en ce que** le mélange contient le constituant (E) en une quantité de 0,005 à 2% en poids.

16. Mélange selon l'une quelconque des revendications 1 à 15, **caractérisé en ce que** le constituant (G) est choisi dans le groupe constitué par les agents de protection contre la lumière, les antioxydants, les solvants usuels des laques, les biocides et les catalyseurs pour la réticulation thermique, qui sont différents des constituants (A) à (F).

17. Mélange selon l'une quelconque des revendications 1 à 15, **caractérisé en ce que** le constituant (G) est un catalyseur pour la réticulation thermique.

18. Procédé pour la préparation d'un mélange durcissable par un rayonnement UV-A, contenant des solvants, selon l'une quelconque des revendications 1 à 17, **caractérisé en ce qu'**on mélange ses constituants (A) à (E) ainsi que le cas échéant (F) et/ou (G) les uns avec les autres et on homogénéise le mélange.

19. Procédé selon la revendication 18, **caractérisé en ce que** le procédé est réalisé à l'abri d'un rayonnement actinique.

20. Utilisation du mélange durcissable par un rayonnement UV-A, contenant des solvants, selon l'une quelconque des revendications 1 à 17 et du mélange préparé à l'aide du procédé selon la revendication 18 ou 19, durcissable par un rayonnement UV-A, contenant des solvants comme Spotblender (agent d'estompage) dans le laquage de réparation de véhicules ou pour la préparation d'un tel Spotblender.

21. Utilisation selon la revendication 20, **caractérisée en ce que** le mélange durcissable par un rayonnement UV-A, contenant des solvants est ajouté à la laque claire de réparation à chaque fois utilisée, puis le mélange est utilisé comme Spotblender.
